# EUROPÄISCHE PATENTSCHRIFT

(11) **EP 3 017 459 B1**
(45) Veröffentlichungstag und Bekanntmachung des Hinweises auf die Patenterteilung: **15.09.2021**
(21) Anmeldenummer: 14730936.3
(22) Anmeldetag: 18.06.2014
(51) Int. Cl.: H01J 49/00, H01J 49/32, H01J 49/40

(54) **BESTIMMUNGSVORRICHTUNG FÜR KOHLENWASSERSTOFF-EMISSIONEN VON MOTOREN**
DETERMINING DEVICE FOR HYDROCARBON EMISSIONS OF MOTORS
DISPOSITIF DE DÉTERMINATION DES ÉMISSIONS D'HYDROCARBURES PAR DES MOTEURS

(30) Priorität: 03.07.2013 DE 202013005959 U
(43) Veröffentlichungstag der Anmeldung: 11.05.2016
(73) Patentinhaber: Verwaltungsgesellschaft für Emissionsanalyse UG (haftungsbeschränkt), 20539 Hamburg (DE)
(72) Erfinder: GOHL, Manfred, 21039 Escheburg (DE)
(74) Vertreter: Glawe, Delfs, Moll
(86) Internationale Anmeldenummer: PCT/EP2014/062864
(87) Internationale Veröffentlichungsnummer: WO 2015/000704

(56) Entgegenhaltungen:
- EP-A1- 1 021 819
- WO-A2-02/08724
- WO-A2-2005/066605
- US-A1- 2003 052 269
- GOHL M ET AL: "DEVELOPMENT AND APPLICATION OF A NEW MASS SPECTROMETER BASED MEASUREMENT SYSTEM FOR FAST ONLINE MONITORING OF OIL EMISSION IN THE RAW EXHAUST GAS OF COMBUSTION ENGINES", SAE TECHNICAL PAPER SERIES, SOCIETY OF AUTOMOTIVE ENGINEERS, WARRENDALE, PA, US, Bd. 2002-01-2713, 21. Oktober 2002 (2002-10-21), Seiten 1-09, XP008050361, ISSN: 0148-7191
- Marvin L. Vestal: "Methods of Ion Generation", Chemical Reviews, vol. 101, no. 2, 1 February 2001 (2001-02-01), pages 361-376, XP55386366, US ISSN: 0009-2665, DOI: 10.1021/cr990104w
- J Throck Watson ET AL: "John Wiley & Sons, Ltd INTRODUCTION TO MASS SPECTROMETRY" In: "Introduction to mass spectrometry : instrumentation, applications, and strategies for data interpretation", 1 January 2007 (2007-01-01), Wiley, Chichester [u.a], XP055389637, ISBN: 978-0-470-51634-8 pages 53-172,
- J Throck Watson ET AL: "Introduction to Mass Spectrometry; Chapter 6 Electron Ionization" In: "Introduction to mass spectrometry : instrumentation, applications, and strategies for data interpretation", 5 October 2007 (2007-10-05), Wiley, Chichester [u.a], XP055704846, ISBN: 978-0-470-51634-8 pages 317-448, DOI: 10.1002/9780470516898,
- J Throck Watson ET AL: "Chapter 7 Chemical Ionization", Introduction to Mass Spectrometry, 5 October 2007 (2007-10-05), pages 451-484, XP055704863, DOI: 10.1002/9780470516898 ISBN: 978-0-470-51689-8 Retrieved from the Internet: URL:https://onlinelibrary.wiley.com/doi/pd fdirect/10.1002/9780470516898.ch7 [retrieved on 2020-06-15]

## Beschreibung

Die Erfindung betrifft eine Bestimmungsvorrichtung für Kohlenwasserstoff-Emissionen, wie sie insbesondere von Motoren ausgehen. Die Bestimmungsvorrichtung umfasst eine Sonde zur Entnahme einer Probemenge, einen Messkanal sowie eine Messeinrichtung. Hierbei handelt es sich um eine Breitbandmesseinrichtung zur Bestimmung der Kohlenwasserstoffe über ein ganzes Massenspektrum hinweg.

Zur Erfüllung immer größerer Umweltschutzanstrengungen spielt die Verringerung von schädlichen Emissionen aus Motoren oder anderen Wärmekraftmaschinen eine bedeutende Rolle. Hier geht es zum einen um unmittelbar aus dem Verbrennungsprozess an sich stammende Emissionen, aber auch andererseits um Emissionen, die aus Nebenvorgängen im oder am Motor herrühren. Hierbei kann es sich andererseits um nach außen wirksame Emissionen handeln, aber auch Vorgänge innerhalb des Motors können dazuzählen, beispielsweise der Kraftstoffeintrag in das Schmieröl oder die Rückführung von Blowby-Gasen in den Brennraum. Um die Emissionen verringern zu können, ist es primär erforderlich, die tatsächlichen stattfindenden Emissionen zu erfassen und zu bewerten. Hierbei sind insbesondere Schmieröl-Emissionen sowie unverbrannte Kohlenwasserstoffe von Bedeutung. Diese müssen mit hoher Genauigkeit schnell gemessen werden können, um auch innermotorische Vorgänge mit ausreichender Dynamik abbilden zu können.

### Stand der Technik

Im Stand der Technik sind verschiedene Messsysteme bekannt. Durch Flammionisationsdetektoren werden die im Abgas unverbrannten Kohlenwasserstoffe mit hoher zeitlicher Auflösung bestimmt. Dieses Verfahren kann den Vorteil für sich buchen, dass es wenig aufwendig ist. Jedoch ist es seiner Natur nach nicht spezifisch, d. h. es kann keine Bestimmung eines Massenspektrums der erfassten Moleküle erfolgen. Damit ist dieses Verfahren zu grob und erfüllt nicht die modernen Anforderungen hinsichtlich einer genauen Zuordnung der Kohlenwasserstoffe nach Kraftstoff- und Ölanteilen.

Zur genauen Charakterisierung von Kohlenwasserstoffen werden Massenspektrometer eingesetzt. Diese bestehen aus einer Ionenquelle, einem Massenanalysator und einem Detektor.

Die zeitliche Auflösung des Systems wird wesentlich durch den Massenanalysator mitbestimmt.

Bei einer bekannten Ausführungsform ist dieser als ein elektrischer Quadrupol ausgeführt, an dem eine Spannungsquelle angeschlossen ist, so dass ein periodisch schwingendes elektrisches Feld entsteht (US-A-2939952). Aufgrund des Feldes laufen nur Ionen mit bestimmtem, spezifischen Masse/ Ladungs-Verhältnis auf stabilen Bahnen, alle anderen sind instabil und werden eliminiert. Zur Erzeugung eines Massenspektrums ist ein zeitaufwendiges sequentielles Messen der Einzelmassen (Scannen) notwendig. Die realistische Messzeit zur Erzeugung eines Spektrums von 50 bis 550 Atommasseeinheiten liegt bei 500 ms.

Bei Flugzeitmassenspektrometern (TOF-MS; Time-of-Flight Mass Spectrometry) (DE 10 2012 203 150 A1) werden unterschiedliche Ionenspezies einer Probe in einem elektrischen Feld beschleunigt. Anschließend durchlaufen die Ionen eine Flugstrecke. Die unterschiedlichen Geschwindigkeiten der verschiedenen Ionenspezies, führen dazu, dass sich die Ionen mit unterschiedlichem Masse-Ladungsverhältnis in Hinblick auf die Bewegungsrichtung trennen. Am Ende des Massenanalysators fallen die Ionen auf den Ionendetektor, der die Häufigkeit der aufeinander folgenden Ionen simultan misst. Ein Flugzeitspektrum im Bereich von 50 bis 550 Atommasseeinheiten kann in weniger als 20 µs aufgezeichnet werden. Zur Erzielung einer besseren Massengenauigkeit und Nachweisgrenze wird in 1 ms aus mehreren Flugzeitspektren ein Massenspektrum berechnet.

Bei der Anwendung eines doppelt fokussierenden Sektorfeld-Massenspektrometer in Mattauch-Herzog-Geometrie (DE 10 2010 056 152 A1) wird im elektrostatischen Analysator die Energiebandbreite des Ionenstrahls reduziert, um im folgenden Magnetfeld eine hohe Auflösung der Massentrennung zu erreichen. Durch die Geometrie können sämtliche Ionenmassen gleichzeitig in einer Fokalebene abgebildet werden. Ein flächiger Detektor ermöglicht die simultane Erfassung des kompletten Massenspektrums. Eine zeitaufwendige sequentielle Messung ist nicht erforderlich.

Eine typische Technik der Ionisierung von Molekülen in der Massenspektrometrie ist die Elektronenstoßionisation (EI) mit 70 eV. Abhängig von der hohen Ionisierungsenergie bei dieser harten Ionisationsmethode tritt eine Fragmentierung der Moleküle in kleinere Bruchstücke auf, die den Substanzen in einem Gemisch nicht eindeutig zugeordnet werden können.

Die Unzulänglichkeiten dieser Technik führten zur Entwicklung von weichen Ionisationsmethoden bei denen im Wesentlichen Molekülionen erzeugt werden. Unterschiedliche Techniken basierend auf chemischer Ionisation (CI; Chemical Ionisation), Feld Ionisation (FI; Field Ionisation) und Photoionisation (PI; Photoioniosation) wurden entwickelt. Für polare Moleküle ist der Einsatz der Matrix-unterstützten Laser-Ionisation (MALDI Matrix-assisted Laser Ionisation) und Elektrospray-Ionisation (ESI) verbreitet.

Bei der Photoionisation können Molekülionen durch gezielte Wahl der Photonenenergie generiert werden. Der Einsatz von UV-Strahlung führt zu einer hohen Selektivität bei aromatischen Kohlenwasserstoffen und wird beispielsweise durch gepulste Laser generiert (REMPI; Laser based Resonanz Enhanced Multiphoton Ionisation). Die Detektion von organischen Stoffen kann durch Einphotonen-Ionisation (SPI, Single Photon Ionization) mit VUV-Strahlung (Vakuum Ultra Violett) vorgenommen werden.

Eine weitere weiche Ionisationsmethode basiert auf der Probenahme mit Überschall (SMB, Supersonic molecular beam) und anschließender Ionisation der energetisch kalten Moleküle mit Elektronenstoßionisation (Cold EI), welche in US 6,617,771 B2 beschrieben wird.

Die erforderliche Kombination aus Nachweisgrenze, Trennschärfe, Selektivität sowie Messgeschwindigkeit der bekannten Systeme entsprechen nicht den heute gestellten Anforderungen zur Betrachtung von Kohlenwasserstoff-Emissionen bei dynamischen motorischen Vorgängen.

Ein verbessertes Verfahren zur Bestimmung des Schmierölgehalts im Abgas ist bekannt aus dem Fachartikel Gohl, M. et al "Development and Application of a New Mass Spectrometer Based Measurement System for Fast Online Monitoring of Oil Emission in the Raw Exhaust Gas of Combustion Engines", SAE Technical Paper Series, SAE Warrendale, PA (US), Vol. 2002) und WO 2005/066605 A2. Demnach wird das zur Probe entnommene Abgasgemisch einer Ionenquelle zugeführt und nach Ionisierung einer Kombination umfassend einer als Multipol ausgebildeten massenspektrometrischen Filter-einrichtung und einer Detektoreinheit zugeführt.

Die Filtereinheit ist so ausgeführt, dass ein bestimmter Durchlassbereich für durchzulassende Masse-Ladungszahlen festgelegt ist. Damit wird eine zu messende Schmieröl-Fraktion festgelegt. Die Messung über diese Fraktion wird mit dem Massenspektrometer als Globalmessung der Intensität in einem Schritt simultan über den gesamten Durchlassbereich durchgeführt. Dieses Messsystem ermöglicht eine ausgesprochen schnelle Messung mit einer Messzeit von 1 ms über einen einstellbaren Messbereich. Die Dynamik dieses Messsystems ist gut, jedoch ist die spektrale Auflösung nicht voll befriedigend.

### Aufgabenstellung

Der Erfindung liegt die Aufgabe zugrunde, ausgehend von dem zuletzt genannten Messsystem eine Verbesserung dahingehend zu erreichen, dass eine verbesserte Auflösung bei gleichzeitig verbesserter Dynamik erreicht wird.

Die erfindungsgemäße Lösung liegt in den Merkmalen des unabhängigen Anspruchs. Vorteilhafte Weiterbildungen sind Gegenstand der abhängigen Ansprüche.

Bei einer Bestimmungsvorrichtung für Kohlenwasserstoff-Emissionen einer Wärmekraftmaschine, insbesondere eines Motors, mit einer Abnahmesonde, die zur Entnahme einer Probemenge aus einem Fluid ausgebildet ist, einem Messkanal, der die Probemenge über eine Ionenquelleneinrichtung zu einer Messeinrichtung leitet, und der Messeinrichtung, die als eine Breitbandmesseinrichtung ausgeführt ist zur Bestimmung eines Massenspektrums über einen definierbaren Bereich, ist erfindungsgemäß vorgesehen, dass die Ionenquelleneinrichtung so ausgebildet ist, dass eine weiche Ionisierung erfolgt, und die Messeinrichtung als ein simultan messender Detektor z.B. nach dem "Time-of-Flight"-Typ oder als "doppelt fokussierendes Sektorfeld-Massenspektrometer in Mattauch-Herzog-Geometrie" ausgeführt ist, der eine Intensitätssignalfolge über das Massenspektrum bildet, wobei sich das mittels der Breitbandmesseinrichtung in einem Schritt zu messende Massenspektrum über einen Bereich erstreckt, welcher sowohl unverbrannte Kohlenwasserstoffe eines Kraftstoffes der Wärmekraftmaschine als auch Kohlenwasserstoffe aus einem Schmieröl der Wärmekraftmaschine umfasst, wobei die Bestimmungsvorrichtung dazu eingerichtet ist, durch Aufsummierung über den Schmierölbereich und den Kraftstoffbereich die jeweiligen Gesamtstoffmengen zu bestimmen.

Nachfolgend seien zuerst einige verwendete Begriffe erläutert:
Unter einem Fluid wird sowohl eine flüssige wie auch eine gasförmige Materie verstanden. Bei der gasförmigen kann es sich insbesondere um Abgas oder Blowby-Gas, und bei der flüssigen insbesondere um ein großes Volumen, wie den Inhalt einer Ölwanne, oder um ein dünnschichtiges Volumen, wie einen Wandfilm, handeln.

Unter einem Massenspektrum wird ein bestimmter Massenbereich verstanden, der durch eine Untergrenze und eine Obergrenze hinsichtlich des Masse/Ladungs-Verhältnisses festgelegt ist.

Unter einer simultanen Messung wird eine schnelle Messung über einen bestimmten Massenbereich verstanden, der ohne zeitaufwendiges sequentielles Messen (Scannen) der Einzelmassen durchgeführt werden kann.

Unter einer Intensitätsfolge wird eine Folge von Intensitätssignalen verstanden, wobei ein Intensitätssignal ein solches Signal ist, welches die Intensität des Auftretens von einem bestimmten Masse/Ladungs-Verhältnis innerhalb des Massenspektrums beschreibt.

Soll beispielsweise ein Spektrum von 170 bis 550 m/z vermessen werden, so umfasst die Intensitätsfolge 381 Intensitätssignale, nämlich eines für jeden Wert innerhalb des Spektrums von 170 bis 550 m/z.

Die Erfindung beruht auf der Kombination zweier Maßnahmen. Die erste Maßnahme besteht darin, eine "weiche" Ionenquelle vorzusehen.

Anders als bei der in dem gattungsbildenden Messsystem verwendeten Ionisierungseinrichtung wird mit der erfindungsgemäß vorgesehenen weichen Ionenquelle eine Fragmentierung der insbesondere langkettigen Moleküle in der Probemenge vermieden. Dies ist im Rahmen der vorliegenden Anmeldung die Definition von "weich", nämlich dass die Ionisierungsenergie so klein ist, dass eine Fragmentierung der zu untersuchenden, in der Regel langkettigen Kohlenwasserstoffe nicht auftritt. Damit bleibt die Gesamtanzahl solcher Moleküle in der Probemenge erhalten. Dies verbessert zum einen die Genauigkeit der Messung der nachfolgenden Breitbandmesseinrichtung, und zum anderen wird durch die Erhaltung der Moleküle die Bildung von Fragmenten verhindert, wie sie ansonsten als Folge des Auseinanderbrechens der langkettigen Moleküle entstünden. Diese Fragmente führen zu Artefakten bei der Messung im Bereich kurzkettiger Moleküle, d. h. es wird die Anwesenheit von kurzkettigen Molekülen vorgetäuscht, die in der Probemenge ursprünglich überhaupt nicht enthalten waren. Um die Verfälschung des Messergebnisses durch derartige Artefakten zu vermeiden, sind im Stand der Technik Filtereinrichtungen erforderlich, die den kürzerkettigen Molekülbereich ausblenden. Die Erfindung vermeidet die Verwendung eines solchen Filters. Damit wird nicht nur der kürzerkettige Molekülbereich akkurat abgebildet, sondern es bleiben die zu messenden langkettigen Moleküle auch vollständig erhalten. Die weiche Ionenquelle schafft damit nicht nur ein besseres Messsignal im Bereich der längerkettigen Moleküle, sondern erweitert den Messbereich durch die Vermeidung von Artefakten durch Fragmente auch in dem Bereich der kürzerkettigen Moleküle.

Mit der Breitbandmesseinrichtung durch Verwendung eines Detektors gemäß dem "Time-of-Flight"-Typ oder dem "doppelt fokussierendes Sektorfeld-Massenspektrometer in Mattauch-Herzog-Geometrie" wird eine schnelle Messung über den gesamten Spektrumbereich von kurzkettigen bis hin zu den langkettigen Molekülen erreicht. Diese Detektoren können aufgrund der Bauart das gesamte Spektrum in weniger als 1 ms "auf einmal" aufnehmen, und dabei jeweils ein Intensitätssignal für die einzelnen Molekülgrößen innerhalb des aufgenommenen Spektrums generieren. Es entsteht somit eine Intensitätssignalfolge, welche die auftretenden Moleküle über das gesamte Spektrum abbildet, und zwar mit hoher Dynamik. Indem dank dieses Detektortyps für jede einzelne Molekülmasse ein eigenes Intensitätssignal bereitgestellt wird, wird erfindungsgemäß durch eine einfache Summenbildung die Gesamt-Stoffmenge zuverlässig und schnell ermittelt. Mit der herkömmlicherweise verwendeten Messeinrichtung, wie sie bei dem gattungsbildenden Stand der Technik vorgesehen war, konnte den einzelnen Molekülmassen nicht jeweils eine eigene Intensität zugeordnet werden. Daher war die Gesamt-Stoffmenge nur ungenau bestimmbar. Mit dem Detektor des erfindungsgemäß vorgesehenen Typs kann eine solche Feinaufteilung der Intensität über das Spektrum nunmehr vorgenommen werden.

Allein für sich wäre diese Feinaufteilung jedoch wertlos, da bei der herkömmlichen Ionisierung die längerkettigen Moleküle durch Fragmentbildung zerstört und so durch die Bildung von kürzerkettigen Fragmenten zwangsläufig Artefakte erzeugt werden, die das Messergebnis beträchtlich verfälschen. Die Erfindung hat erkannt, dass die mit diesem Detektor erreichte Feinauflösung erst dann zur vollen Geltung kommt, wenn sie mit der erfindungsgemäßen weichen Ionenquelle kombiniert ist. Dies ist im Stand der Technik ohne Beispiel.

Die Ionenquelleneinrichtung ist zweckmäßigerweise zu einer Ionisierung mit einer Energie von weniger als 50 eV ausgebildet, vorzugsweise mindestens jedoch mit einer Energie von 5 eV. Damit wird einerseits eine zuverlässige Ionisierung der Moleküle der zu analysierenden Probemenge erreicht, andererseits jedoch eine Fragmentierung insbesondere von längerkettigen Molekülen zuverlässig verhindert.

Besonders vorteilhaft ist eine Ausführung der Ionenquelleneinrichtung nach dem Prinzip der chemischen Ionisation (CI), der Photoionisation (PI) oder der kalten Elektronenstoßionisation (Cold EI).

Der Detektor des "Time-of-Flight"-Typs weist vorzugsweise einen Ionenspiegel auf, der zweckmäßig als ein Reflektron ausgeführt ist. Damit kann ein Zurückwerfen des Ionenstrahls erreicht werden, so dass sich bei unveränderter Baulänge des Detektors die Laufstrecke des Ionenstrahls etwa verdoppelt. So kann sowohl die Empfindlichkeit wie auch das Auflösungsvermögen gesteigert werden.

Besonders vorzuziehen ist hierbei eine Ausführung des Detektors mit einem orthogonalen Flugrohr. Diese Ausführungsform kann besondere Vorzüge hinsichtlich Auflösungsfeinheit und -dynamik für sich buchen.

Bei einer bewährten Ausführungsform wirkt der Detektor des "Time-of-Flight"-Typs mit einer Auswerteeinheit zusammen, die zur Bestimmung eines Spektrums über einen vorzugsweise vorwählbaren Bereich ausgebildet ist. Damit kann eine automatisierte Auswertung der von dem Detektor mit hoher Dynamik und Auflösung erzeugten Intensitätssignalfolge durchgeführt werden. Die Intensitätssignalfolge kann hierbei auf einer Zeitbasis erfolgen, jedoch ist es auch denkbar, dass sie auf Magnetfeldbasis mit einem "doppelt fokussierendes Sektorfeld-Massenspektrometer in Mattauch-Herzog-Geometrie" erfolgt.

Die Auswerteeinheit umfasst vorzugsweise einen Mengenrechner, an dem ein Intensitätsvektor und ein Massenspektrum angelegt sind, und der diese über ein vorzugsweise einstellbares Auswertefeld verknüpft. Damit kann aus der Intensitätssignalfolge automatisiert eine Gesamtmenge über das Massenspektrum hinweg bestimmt werden. So wird man üblicherweise an einer Bestimmung über das gesamte Spektrum hinweg interessiert sein. Der Mengenrechner der Auswerteeinheit ist unterfeldfähig. Damit können bestimmte Bereiche separat ausgewertet werden, beispielsweise leichtflüchtige Schmieröl- Emissionen mit ihren mittellangen Molekülen und schwerflüchtige Fraktionen mit längeren Molekülen. Ferner ist vorzugsweise für die Auswerteeinheit ein Klassifizierer vorgesehen, der beispielsweise einen Bereich für höherkettige Moleküle (oberhalb von 170 m/z) für Schmieröl-Emissionen bei Ottomotoren und unterhalb dieses Werts für unverbrannte Kohlenwasserstoffe aus Kraftstoff-Emissionen auswertet.

Mit besonderem Vorteil weist die Auswerteeinheit ein Klassifikationsmodul auf zur Bestimmung einer Kraftstoff- oder Schmierölart. Damit können wählbare Bereiche miteinander ins Verhältnis gesetzt werden, was zur Analyse unterschiedliche Kraftstoffe, Schmieröle oder Additivkomponenten hinsichtlich ihrer spezifischen Grundbausteine der Stoffgruppen genutzt werden kann, beispielsweise in Bezug auf den Schmierölgehalt an Estern oder PAO (Polyalphaolefin) oder dem Gehalt an Biokraftstoffen, wie z.B. Fettsäuremethylester (FAME), Rapsöl-Methylester (RME) und Ethanol.

Insbesondere in Bezug auf solche Bestandteile wie beispielsweise Ester, PAO und Ethanol können zweckmäßigerweise Zusatzdetektoren vorgesehen sein, die auf eine vorbestimmte Stoffart ansprechen.

Zur Entnahme der Probemenge ist vorzugsweise die Abnahmesonde ausgebildet als eine Abgassonde und/oder Fluidsonde. Die Abgassonde kann im Brennraum oder im unmittelbar anschließenden Bereich des Abgasstrangs angeordnet sein. Die Fluidsonde kann ebenfalls im Brennraum angeordnet sein, kann zweckmäßigerweise aber auch im Bereich eines Schmierölbehälters (beispielsweise Ölwanne) vorgesehen sein. Vorzugsweise ist ein Modusumschalter vorgesehen, der die Auswerteeinrichtung zwischen einem Betrieb mit der Abgassonde bzw. der Fluidsonde als Abnahmesonde umschaltet. Somit kann mit derselben Auswerteeinheit zwischen den verschiedenen Betriebsarten hin- und hergeschaltet werden.

Es kann nicht nur eine Aussage über die Emissionen über das Abgas getroffen werden, sondern auch beispielsweise über Emissionsanteile in dem Schmierstoff, insbesondere Kraftstoffeintrag in das Schmieröl des Motors.

Die Erfindung erstreckt sich ferner auf ein entsprechendes Verfahren, mit den Schritten Entnehmen einer Probemenge aus einem Fluid mittels einer Abnahmesonde, Überführen der Probemenge zu einer Messeinrichtung, Ionisieren der Probemenge mittels einer Ionenquelle, gekennzeichnet durch Durchführen des Ionisierens als eine weiche Ionisierung und Bestimmen einer Intensitätssignalfolge über ein Massenspektrum durch Bestimmen von Flugzeiten für die einzelnen Ionenmassen oder durch Bestimmen der Auslenkung der Ionenmassen in einem Magnetfeld, wobei zweckmäßigerweise die vorstehend beschriebene Bestimmungsvorrichtung verwendet wird.

Die Erfindung wird nachfolgend unter Bezugnahme auf die beigefügte Zeichnung näher erläutert, in der ein vorteilhaftes Ausführungsbeispiel dargestellt ist.

Es zeigen:
- Fig. 1: eine Übersichtsdarstellung einer Vorrichtung gemäß einem Ausführungsbeispiel der Erfindung;
- Fig. 2: ein Blockdiagramm zu der Vorrichtung;
- Fig. 3: eine Ansicht eines Detektors für die Vorrichtung gemäß Figur 1;
- Fig. 4a, b: ein Massenspektrogramm zur Veranschaulichung der Wirkung der Ionisierungsquelle;
- Fig. 5: ein Massenspektrogramm zur Veranschaulichung der Bestimmung einer Gesamtmenge;
- Fig. 6: ein Massenspektrogramm zur Bestimmung verschiedener Ölsorten, und
- Fig. 7: ein Massenspektrogramm zur Bestimmung von Kraftstoffeintrag in Öl.

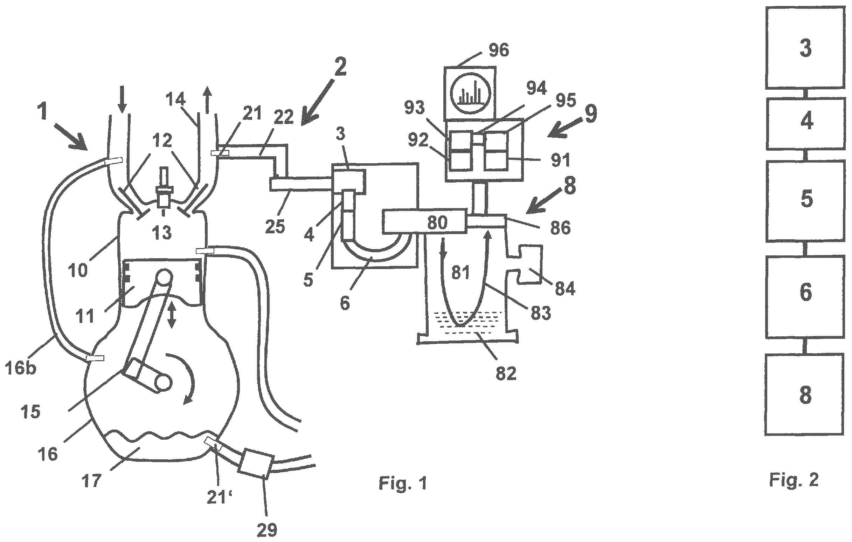

In den Figuren 1 und 2 ist ein Ausführungsbeispiel für eine Bestimmungsvorrichtung gemäß der Erfindung dargestellt. Die Bestimmungsvorrichtung dient der Bestimmung von Ölemissionen sowie von Emissionen unverbrannter Kohlenwasserstoffe (HC), die von einem Verbrennungsmotor stammen. Beim dargestellten Ausführungsbeispiel handelt es sich um einen Verbrennungsmotor nach dem Hubkolbenprinzip, jedoch ist das Ausführungsbeispiel der Erfindung darauf nicht beschränkt.

Ein in seiner Gesamtheit mit der Bezugsziffer 1 bezeichneter Verbrennungsmotor weist einen Zylinder 10 mit einem darin auf und ab beweglich gelagerten Kolben 11 auf. Oberhalb des Kolbens ist ein Brennraum 13 ausgebildet, dem über Ventile 12 Frischgas zugeführt und von dem Abgas abgeführt wird in einen Abgaskrümmer 14. Unterhalb des Zylinders 10 mit dem Kolben 11 ist ein Kurbelgehäuse 16 angeordnet, welches ein Kurbeltrieb 15 für den Kolben 11 und eine Kurbelgehäuseentlüftung 16b zur Abführung von Blowby-Gasen umfasst. Am Boden des Kurbelgehäuses 16 befindet sich eine Ölwanne 17 für Schmieröl.

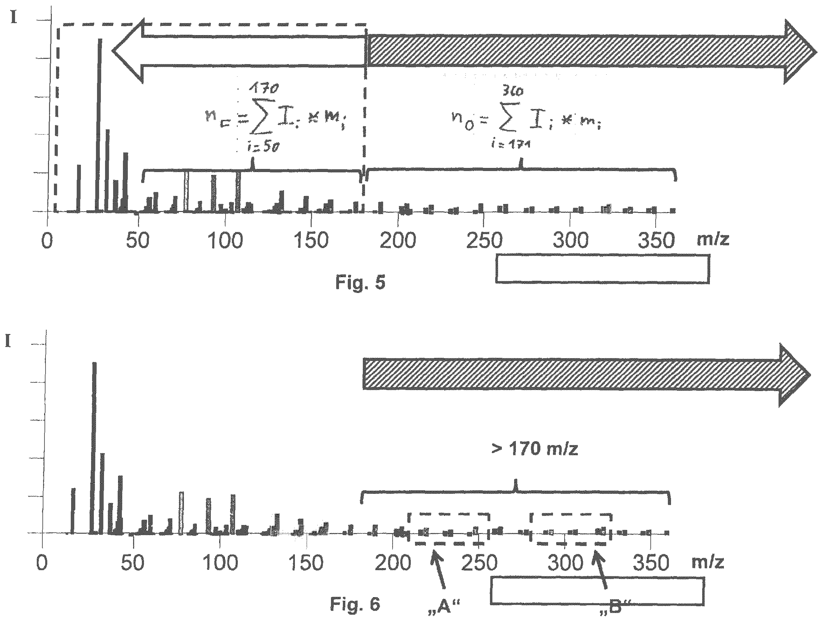

Der Verbrennungsmotor ist an sich konventionell ausgeführt, so dass insoweit auf eine detaillierte Beschreibung verzichtet werden kann. Anzumerken ist, dass im Wesentlichen folgende Emissionen des Verbrennungsmotors auftreten und sich im Massenspektrum wie folgt abbilden (siehe auch Fig. 5) :
1. Leichtflüchtige Abgaskomponenten, wie Stickstoff, Stickoxide, Sauerstoff, Kohlenmonoxid, Kohlendioxid, Wasser und Argon. Diese Komponenten sind verhältnismäßig leicht und haben eine spezifische Masse (Masse geteilt durch Ladungszahl m/z), die im Bereich von <50 m/z liegt.
2. Unverbrannte Kohlenwasserstoffe aus dem Kraftstoff, die bei Ottomotorkraftstoffen üblicherweise aus maximal zehn Kohlenstoffatomen bestehen. Daraus gebildete Ionen haben eine spezifische Masse von <170 m/z.
3. Kohlenwasserstoffe aus dem Schmieröl, die Ionen mit einer spezifischen Masse von >170 m/z erzeugen. Ein Beispiel hierfür ist Docosane mit 22 Kohlenstoffatomen und 45 Wasserstoffatomen und einer spezifischen Masse von 310.

An den Motor 1 angeschlossen ist eine Abgassonde 2 mit einem Sondenkopf 21 am Abgaskrümmer 14. Von dem Sondenkopf 21 gelangt eine Probemenge über eine Transferkapillare 22 zu einer Überführungseinheit 25 mit einer Vakuumpumpe. Danach wird die Probemenge einer Ionenquelleneinrichtung 3 zugeführt, die so ausgebildet ist, dass der durch die Kapillare 22 einströmende Probemengenabgasstrom ionisiert wird. Die Ionenquelleneinrichtung 3 ist als ein Ionisierer nach dem Prinzip der chemischen Ionisation (CI), der Photoionisation (PI) oder der kalten Elektonenstoßionisation (Cold EI) ausgeführt und ist so ausgelegt, dass eine weiche Ionisierung mit einer Ionisierungsenergie von maximal 50 eV erfolgt.

Unmittelbar in Flussrichtung anschließend ist ein Vorfilter 4 angeordnet. Es dient ferner dazu, die Ionen in dem nachfolgenden Hochvakuumbereich mit dem Massenfilter 5 zu überführen. Daher schließt sich unmittelbar an das Vorfilter 4 ein erstes Massenfilter 5 und dahinter eine Kollisionszelle 6 an. Das Massenfilter 5 dient dazu, Ionen mit unerwünschtem Bestandteil auszufiltern. Das Massenfilter 5 ist dazu als Quadrupol-Filter ausgebildet. Der Aufbau von Quadrupol-Filter im Allgemeinen ist im Stand der Technik bekannt und braucht hier nicht näher erläutert zu werden.

In Flussrichtung hinter der Kollisionszelle 6 ist als Messeinrichtung ein Detektor 8 angeordnet, der als "Time-of-Flight"-Typ oder als "doppelt fokussierendes Sektorfeld-Massenspektrometer in Mattauch-Herzog-Geometrie" ausgeführt ist. Mit dem Detektor 8 zusammen wirkt eine Ausrichtwerteeinheit 9.

Der "Time-of-Flight"-Detektor 8 ist in der Bauweise mit orthogonalem Flugrohr ausgeführt. Er umfasst eine Beschleunigereinheit 80, welche die Ionen auf eine Parabelflugbahn in das Flugrohr 81 beschleunigt. Mittels einer Hochvakuumpumpe 84 ist das Flugrohr
81 evakuiert. Die Ionen bewegen sich zuerst zu dem gegenüberliegenden Ende hin, wo ein Reflektron als Ionenspiegel 82 angeordnet ist. Die Ionen werden dadurch zurückgeworfen und laufen im Flugrohr 81 wieder zurück, bis sie auf einen Elektronenvervielfacher 86 auftreffen. Dieser gibt einen Signalimpuls ab, der die Zeit markiert, welche das jeweilige Ion für das Durchlaufen seiner Ionenbahn benötigt. Schwere Ionen mit einer hohen spezifischen Masse (m/z) bewegen sich auf einer Flugbahn 83 und benötigen hierbei eine längere Zeit als leichtere Ionen mit einer geringen spezifischen Masse. Dies bedeutet, es können Ionen mit unterschiedlichster Masse zur selben Zeit in dem "Time-of-Flight"-Detektor 8 eingebracht werden, und es wird abhängig von der Häufigkeit des Auftretens der jeweiligen Ionen ein Intensitätssignal ausgegeben, genauer gesagt mit einer Intensitätssignalfolge ausgegeben, wobei zuerst die Intensitätssignale für die Ionen mit geringer spezifischer Masse und nachfolgend diejenigen mit sukzessiv höherer spezifischer Masse ausgegeben werden.

Im Ergebnis wird dann eine breitbandige "auf einmal"- Messung mit hoher Auflösung ermöglicht. Das so gewonnene Messsignal ist ein Intensitätsfolgesignal und wird an die Auswerteeinheit 9 übermittelt. Der Detektor 8 ist dazu befähigt, das komplette Spektrum der Molekülionen mit hoher Dynamik simultan zu erfassen, nämlich innerhalb von weniger als 20ps. Damit stehen mehr als 5000 Spektren je Sekunde zur Auswertung zur Verfügung.

Die Auswerteeinheit umfasst einen Mengenrechner 91, an dem das Intensitätsfolgesignal sowie ein Signal für das Massenspektrum angelegt sind. Die Auswerteeinheit umfasst ferner einen Klassifizierer 92, der zur Bestimmung von Anteilen des Schmieröls bzw. von unverbrannten Kohlenwasserstoffen aus dem Kraftstoff oder Additivkomponenten in dem ermittelten Massenspektrum ausgebildet ist. Ferner umfasst die Auswerteeinrichtung ein Klassifikationsmodul 93 zur Bestimmung der Kraftstoff- und Ölart. Das Klassifikationsmodul 93 ist hierbei ausgelegt, bestimmte Bestandteile hinsichtlich ihrer Auftretungshäufigkeit zu bewerten und dann eine Zuordnung vorzunehmen. Bei den Bestandteilen kann es sich insbesondere um Ethanol und PAO (Polyalphaolefine) handeln oder um gewisse Ester. Das Klassifikationsmodul 93 ist vorzugsweise mit einem zu diesem Zweck mit einem Esterdetektor 94 versehen. Ferner ist zweckmäßigerweise ein Schwellwertschalter 95 vorgesehen, der beim Auftreten von vorwählbaren Ereignissen, beispielsweise zum Auftreten von Emissionen einer bestimmten Ölart, ein Signal ausgibt.

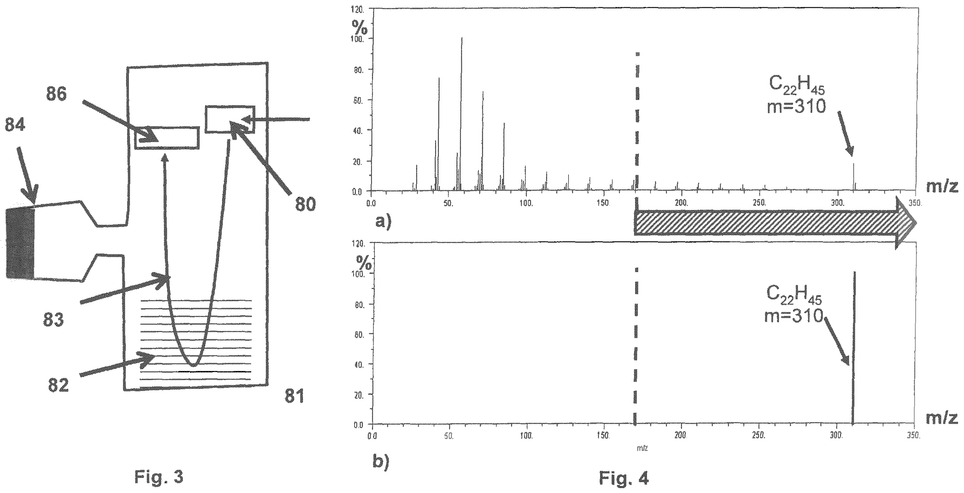

Die Wirkung der Ionenquelleneinrichtung 3 ist in Figur 4 visualisiert. Im Stand der Technik erfolgt eine Ionisierung mit verhältnismäßig hoher Energie, so dass langkettige Moleküle zerteilt werden, wie das beispielhaft dargestellte Docosane C22H45 mit spezifischer Masse von 310. Man erkennt, dass es durch den Stand der Technik bei Elektronenstoßionisierung mit hoher Energie zu Fragmentbildung kommt, wobei sich viele Fragmente außerhalb des Messbereichs für Schmieröl, d. h. unterhalb einer spezifischen Masse von 170 m/z befinden. In dem eigentlichen Messbereich für das Schmieröl (Bereich >170 m/z) verbleiben nur recht wenig Molekülionen. Damit ergibt sich ein erheblicher Signalverlust durch die Fragmentierung, da die Fragmente aus dem eigentlichen Messbereich für das Schmieröl herausfallen. Im dargestellten Beispiel in Fig. 4a beträgt der Signalverlust knapp 80 %. Mit der erfindungsgemäßen weichen Ionenquelle 3 wird dies vermieden. Wie aus Fig. 4b gut erkennbar ist, wird das langkettige Molekül nicht fragmentiert, so dass die Molekülionen im Messbereich vollständig erhalten bleiben. Es ergibt sich somit ein wesentlich kräftigeres Signal und es werden keine Fragmente gebildet.

Zur Bestimmung der Gesamtstoffmenge in Bezug auf die Schmieröl- Emissionen erfolgt eine Summenbildung über den Messbereich hinweg. In Bezug auf das Schmieröl ist der Bereich derjenige mit spezifischen Massen von >170 von Interesse (Schmierölbereich). Zur Bestimmung wird ein Produkt gebildet aus der Intensität für eine bestimmte spezifische Masse multipliziert mit der jeweiligen spezifischen Masse. Durch Aufsummierung über den gesamten Bereich ergibt sich hiermit die Gesamtstoffmenge für den Schmierölbereich. Dieser Schmierölbereich ist in Figur 5 durch den schraffierten Pfeil dargestellt. Die Gesamtmenge des Schmieröls nO wird mittels der dargestellten Formel berechnet. Entsprechendes gilt für unverbrannte Kohlenwasserstoffe (HC) aus dem Kraftstoff. Für sie ist der Bereich unterhalb einer spezifischen Masse von 170 maßgebend (Kraftstoffbereich). Er ist durch den nicht schraffierten Pfeil in Fig. 5 veranschaulicht. Zur Bestimmung wird in ähnlicher Weise eine Summe gebildet aus dem Produkt des Intensitätssignals für die jeweilige spezifische Masse multipliziert mit der jeweiligen Molekülmasse. Damit wird die Gesamtstoffmenge nF für unverbrannte Kohlenwasserstoffe aus Kraftstoff bestimmt. Durch Addition der beiden Gesamtstoffmengen nO für Öl und nF für unverbrannte Kohlenwasserstoffe aus Kraftstoff kann die Gesamtstoffmenge der Kohlenwasserstoffe im Abgasgemisch bestimmt werden. Dieses Maß ist besonders wichtig für die Zertifizierung im Hinblick auf das Erfüllen von Umweltstandards.

Dank der feinen Auflösung im Spektrum unter Vermeidung von Fragmentierung kann unter Zuhilfenahme getrennter Ölkreisläufe mit verschiedenen Schmierölen bestimmt werden, mit welcher Baugruppe eines Motors die Schmieröl-Emission verursacht wird. Es wird dabei Bezug genommen auf Figur 6. Dort sind zwei nicht überlappende Felder dargestellt, die mit "A" und "B" bezeichnet sind. Es handelt sich hierbei um zwei verschiedene Schmieröle, die hinsichtlich ihrer charakteristischen Stoffgruppen unterscheiden, insbesondere hinsichtlich ihrer Polyalphaolofine (PAO) sowie ihrer Ester.

Bei Schmieröl A handelt es sich um solches für den Motor 1 selbst, wenn es sich bei dem Schmieröl B um solches für einen Turbolader (nicht dargestellt) des Motors handelt. Durch die Anwendung des Klassifikationsmoduls 93 kann in dem Spektrum bestimmt werden, mit welcher Intensität welche Schmieröle auftreten und damit eine Zuordnung der Schmieröl-Emission zu der jeweiligen Baugruppe erfolgen. Handelt es sich um ein besonders kritisches Bauteil, wie den Turbolader, so kann über eine optische und/oder akustische Ausgabeeinheit 96 ein entsprechendes Signal ausgegeben werden.

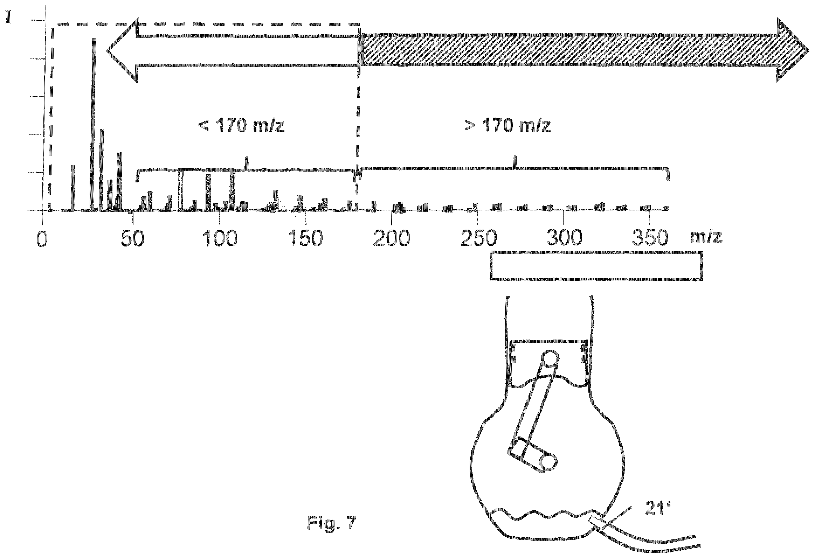

Bei einer in Figur 7 dargestellten Variante kann auch die Größe des Kraftstoffanteils im Schmieröl bestimmt werden. Wie auch vorstehend sind hierbei solche Molekülionen mit geringerer Masse, es heißt mit einer spezifischen Masse von <170 m/z als unverbrannte Kohlenwasserstoffe aus Kraftstoffen definiert und die schwereren mit einer spezifischen Masse von über 170 m/z als Schmierölbestandteile definiert. Zur Bestimmung des Kraftstoffeintrags in das Schmieröl erfolgt eine Probenentnahme mittels eines Sondenkopfs 21', der an der Ölwanne 17 montiert ist. Auf diesem wird mittels eines Modusumschalters 29 umgeschaltet, so dass die Probemenge dann aus der Abgassonde 21' und nicht aus der Abgassonde 21 der Ionenquelle 3 zugeführt wird. Auf dieselbe Weise wie vorstehend beschrieben kann so schnell und mit hoher Genauigkeit der Kraftstoffeintrag in das Schmieröl analysiert werden.

## Patentansprüche

1. Bestimmungsvorrichtung für Kohlenwasserstoff-Emissionen einer Wärmekraftmaschine, insbesondere eines Motors, mit einer Abnahmesonde (21), die zur Entnahme einer Probemenge aus einem Fluid ausgebildet ist, einem Messkanal (22), die Probemenge über eine Ionenquelleneinrichtung (3) zu einer Messeinrichtung (8) leitet,
**dadurch gekennzeichnet, dass**
die Messeinrichtung (8) eine Breitbandmesseinrichtung ist, die zur Bestimmung eines zu messenden Massenspektrums in einem Schritt ausgebildet ist, wobei die Ionenquelleneinrichtung (3) zu einer weichen Ionisierung ausgebildet ist und die Messeinrichtung (8) als ein simultan messender "Time-of-Flight"-Detektor oder als "doppelt fokussierendes Sektorfeld-Massenspektrometer in Mattauch-Herzog-Geometrie" ausgeführt ist, der eine Intensitätssignalfolge über das zu messende Massenspektrum bildet, wobei sich das mittels der Breitbandmesseinrichtung in einem Schritt zu messende Massenspektrum über einen Bereich erstreckt, welcher sowohl unverbrannte Kohlenwasserstoffe eines Kraftstoffes der Wärmekraftmaschine als auch Kohlenwasserstoffe aus einem Schmieröl der Wärmekraftmaschine umfasst, wobei die Bestimmungsvorrichtung dazu eingerichtet ist, durch Aufsummierung über den Schmierölbereich und den Kraftstoffbereich die jeweiligen Gesamtstoffmengen zu bestimmen.

2. Bestimmungsvorrichtung nach Anspruch 1, **dadurch gekennzeichnet, dass** die Ionisiereinrichtung (3) zum Ionisieren mit weniger als 50 eV ausgebildet ist, vorzugsweise aber mindestens mit 5 eV.

3. Bestimmungsvorrichtung nach Anspruch 1 oder 2, **dadurch gekennzeichnet, dass** die Ionenquelleneinrichtung als chemischen Ionisation (CI), Photoionisation (PI) oder kalte Elektronenstoßionisation (Cold EI) ausgeführt ist.

4. Bestimmungsvorrichtung nach einem der vorangehenden Ansprüche, **dadurch gekennzeichnet, dass** der Detektor (8) einen Ionenspiegel (82) aufweist, der vorzugsweise als ein Reflektron ausgeführt ist.

5. Bestimmungsvorrichtung nach einem der vorangehenden Ansprüche, **dadurch gekennzeichnet, dass** der Detektor (8) mit einem orthogonalen Flugrohr (81) versehen ist.

6. Bestimmungsvorrichtung nach einem der vorangehenden Ansprüche, **dadurch gekennzeichnet, dass** der Detektor (8) mit einer Auswerteeinheit (9) zusammenwirkt, die zur Bestimmung eines Spektrums über eine vorzugsweise wählbare Basis ausgebildet ist, weiter vorzugsweise auf Zeitbasis oder auf Magnetfeldbasis.

7. Bestimmungsvorrichtung nach Anspruch 6, **dadurch gekennzeichnet, dass** die Auswerteeinheit (9) einen Mengenrechner (91) umfasst, an den ein Intensitätsvektor und ein Massenspektrum angelegt sind, und diese über ein vorzugsweise einstellbares Auswertefeld verknüpft.

8. Bestimmungsvorrichtung nach Anspruch 7, **dadurch gekennzeichnet, dass** der Mengenrechner (91) der Auswerteeinheit (9) unterfeldfähig ist.

9. Bestimmungsvorrichtung nach einem der Ansprüche 6 bis 8, **dadurch gekennzeichnet, dass** die Auswerteeinheit (9) ein Klassifikationsmodul (93) aufweist zur Bestimmung einer Ölart, einer Kraftstoffart oder bestimmter Additivkomponenten.

10. Bestimmungsvorrichtung nach einem der Ansprüche 6 bis 9, **dadurch gekennzeichnet, dass** die Auswerteeinheit einen Zusatzdetektor (94) für eine vorbestimmte Stoffart aufweist, insbesondere einen Ester-, Ethanol und PAO-Detektor.

11. Bestimmungsvorrichtung nach einem der Ansprüche 6 bis 10, **dadurch gekennzeichnet, dass** die Auswerteeinheit (9) ein Klassifikationsmodul (93) aufweist, das zur Gewichtung verschiedener Felder und/oder Unterfelder ausgebildet ist.

12. Bestimmungsvorrichtung nach Anspruch 11, **dadurch gekennzeichnet, dass** die Auswerteeinheit (9) mit einem Schwellwertschalter (95) zusammenwirkt, der bei Auftreten eines vorwählbaren Emissionsspektrums ein Signal ausgibt

13. Bestimmungsvorrichtung nach einem der Ansprüche 6 bis 12, **dadurch gekennzeichnet, dass** ein Modusumschalter (29) vorgesehen ist, der zwischen einem Abgassondenbetrieb und einem Fluidsondenbetrieb umschaltet.

## Claims

1. Determination device for hydrocarbon emissions of a thermal engine, in particular an engine, having a sampling probe (21), which is designed to take a sample quantity from a fluid, a measuring channel (22), which conducts the sample quantity via an ion source unit (3) to a measuring unit (8), **characterized in that** the measuring unit (8) is a broadband measuring unit, which is designed to determine a mass spectrum to be measured in one step, wherein the ion source unit (3) is designed for soft ionization and the measuring unit (8) is embodied as a simultaneously measuring "time-of-flight" detector or as a "double-focusing sector field mass spectrometer in Mattauch-Herzog geometry", which forms an intensity signal sequence over the mass spectrum to be measured, wherein the mass spectrum to be measured in one step by means of the broadband measuring unit extends over a range which comprises both unburned hydrocarbons of a fuel of the thermal engine and hydrocarbons from a lubricant oil of the thermal engine, wherein the determination device is designed to determine the respective total material quantities by summation over the lubricant oil range and the fuel range.

2. Determination device according to Claim 1, **characterized in that** the ionization unit (3) is designed for ionization at less than 50 eV, but preferably at least at 5 eV.

3. Determination device according to Claim 1 or 2, **characterized in that** the ion source unit is embodied as chemical ionization (CI), photoionization (PI), or cold electron impact ionization (cold EI).

4. Determination device according to any one of the preceding claims, **characterized in that** the detector (8) has an ion mirror (82), which is preferably embodied as a reflectron.

5. Determination device according to any one of the preceding claims, **characterized in that** the detector (8) is provided with an orthogonal flight tube (81).

6. Determination device according to any one of the preceding claims, **characterized in that** the detector (8) works together with an analysis unit (9), which is designed to determine a spectrum over a preferably selectable base, furthermore preferably based on time or based on a magnetic field.

7. Determination device according to Claim 6, **characterized in that** the analysis unit (9) comprises a quantity computer (91), to which an intensity vector and a mass spectrum are applied, and it links them via a preferably settable analysis field.

8. Determination device according to Claim 7, **characterized in that** the quantity computer (91) of the analysis unit (9) is capable of subfields.

9. Determination device according to any one of Claims 6 to 8, **characterized in that** the analysis unit (9) has a classification module (93) for determining a type of oil, a type of fuel, or specific additive components.

10. Determination device according to any one of Claims 6 to 9, **characterized in that** the analysis unit has an auxiliary detector (94) for a predetermined type of material, in particular an ester, ethanol, and PAO detector.

11. Determination device according to any one of Claims 6 to 10, **characterized in that** the analysis unit (9) has a classification module (93), which is designed for weighting various fields and/or subfields.

12. Determination device according to Claim 11, **characterized in that** the analysis unit (9) works together with a threshold value switch (95), which outputs a signal upon the occurrence of a preselectable emission spectrum.

13. Determination device according to any one of Claims 6 to 12, **characterized in that** a mode switchover switch (29) is provided, which switches over between exhaust gas probe operation and fluid probe operation.

## Revendications

1. Arrangement de détermination pour les émissions d'hydrocarbures d'une machine à énergie thermique, notamment d'un moteur, comprenant une sonde de réception (21), qui est configurée pour prélever un échantillon d'un fluide, un canal de mesure (22), qui conduit l'échantillon vers un dispositif de mesure (8) par le biais d'un dispositif source d'ions (3),
**caractérisé en ce que**
le dispositif de mesure (8) est un dispositif de mesure à large bande, qui est configuré pour déterminer un spectre de masse à mesurer en une étape, le dispositif source d'ions (3) étant configuré pour une ionisation douce et le dispositif de mesure (8) étant réalisé sous la forme d'un détecteur à « temps de vol » à mesure simultanée ou sous la forme d'un « spectromètre de masse à champ sectoriel à double focalisation à géométrie de Mattauch-Herzog », lequel forme une séquence de signaux d'intensité sur le spectre de masse à mesurer, le spectre de masse à mesurer en une étape au moyen du dispositif de mesure à large bande s'étendant sur une plage qui comporte à la fois les hydrocarbures non consumés d'un carburant de la machine à énergie thermique ainsi que les hydrocarbures issus d'une huile de lubrification de la machine à énergie thermique, l'arrangement de détermination étant conçu pour déterminer les quantités de substances totales respectives par addition sur la plage d'huile de lubrification et la plage de carburant.

2. Arrangement de détermination selon la revendication 1, **caractérisé en ce que** le dispositif d'ionisation (3) est configuré pour ioniser avec moins de 50 eV, mais de préférence au moins avec 5 eV.

3. Arrangement de détermination selon la revendication 1 ou 2, **caractérisé en ce que** le dispositif source d'ions est réalisé sous la forme d'une ionisation chimique (CI), d'une photoionisation (PI) ou d'une ionisation par impact électronique à froid (I.E. à froid).

4. Arrangement de détermination selon l'une des revendications précédentes, **caractérisé en ce que** le détecteur (8) possède un miroir à ions (82), qui est de préférence réalisé sous la forme d'un réflectron.

5. Arrangement de détermination selon l'une des revendications précédentes, **caractérisé en ce que** le détecteur (8) est pourvu d'un tube de vol (81) orthogonal.

6. Arrangement de détermination selon l'une des revendications précédentes, **caractérisé en ce que** le détecteur (8) coopère avec une unité d'interprétation (9), qui est configurée pour déterminer un spectre sur une base qui peut de préférence être sélectionnée, encore de préférence à base du temps ou à base d'un champ magnétique.

7. Arrangement de détermination selon la revendication 6, **caractérisé en ce que** l'unité d'interprétation (9) comporte un calculateur de quantité (91), auquel sont appliqués un vecteur d'intensité et un spectre de masse, et lie ceux-ci par le biais d'un champ d'interprétation de préférence réglable.

8. Arrangement de détermination selon la revendication 7, **caractérisé en ce que** le calculateur de quantité (91) de l'unité d'interprétation (9) est compatible sous-champ.

9. Arrangement de détermination selon l'une des revendications 6 à 8, **caractérisé en ce que** l'unité d'interprétation (9) possède un module de classification (93) destiné à déterminer un typa d'huile, un type de carburant ou certains composants additifs.

10. Arrangement de détermination selon l'une des revendications 6 à 9, **caractérisé en ce que** l'unité d'interprétation comporte un détecteur supplémentaire (94) pour un type de substance prédéterminé, notamment un détecteur d'ester, d'éthanol et de PAO.

11. Arrangement de détermination selon l'une des revendications 6 à 10, **caractérisé en ce que** l'unité d'interprétation (9) possède un module de classification (93) qui est configuré pour la pondération de différents champs et/ou sous-champs.

12. Arrangement de détermination selon la revendication 11, **caractérisé en ce que** l'unité d'interprétation (9) coopère avec un commutateur à valeur de seuil (95), qui délivre un signal lorsque survient un spectre d'émission pouvant être présélectionné.

13. Arrangement de détermination selon l'une des revendications 6 à 12, **caractérisé en ce qu'**un inverseur de mode (29) est présent, lequel permute entre un mode sonde de gaz d'échappement et un mode sonde de fluide.
